# EUROPEAN PATENT SPECIFICATION

(11) **EP 1 380 460 B1**
(45) Date of publication and mention of the grant of the patent: **19.03.2008**
(21) Application number: 02015408.4
(22) Date of filing: 11.07.2002
(51) Int. Cl.: B60K 15/067, B60K 15/063, B60R 19/00

(54) **Vehicle with fuel tank**
Fahrzeug mit Kraftstofftank
Véhicule à réservoir de carburant

(43) Date of publication of application: 14.01.2004
(73) Proprietor: Daimler AG, 70327 Stuttgart (DE)
(72) Inventor: Bauer, Rainer, 71299 Wimsheim (DE); Köster, Andreas, 73240 Wendlingen/Neckar (DE); Manthiram, Natarajan, 73732 Esslingen (DE)

(56) References cited:
- DE-A- 4 009 244
- DE-A- 19 806 607
- PATENT ABSTRACTS OF JAPAN vol. 018, no. 192 (M-1587), 4 April 1994 (1994-04-04) & JP 06 001298 A (MITSUBISHI HEAVY IND LTD), 11 January 1994 (1994-01-11)

## Description

The invention relates to a vehicle having at least a fuel tank for holding a fuel for the operation of a vehicle propulsion system according to the preamble of Claim 1.

A such vehicle is disclosed in DE-A-198 06 607.

US patent 4,570,446 A1 discloses a vehicle having a tank for fuel in the form of hydrogen. In this arrangement, a plurality of cylinders is arranged in a housing and filled with a hydrogen- storing medium. In these cylinders hydrogen can be desorbed under the effect of high temperatures and fed to an internal combustion engine. The adsorption and desorption of hydrogen occurs at low pressures. It is possible, however, to carry gaseous hydrogen under high pressures in this vehicle tank.

An object of the invention is to specify a vehicle having a fuel tank, which is suitable for the transport and storage of gaseous or liquid hydrogen.

This object is achieved in a vehicle having at least one fuel tank for holding a fuel for the operation of a vehicle propulsion system, wherein a structure is provided for executing a controlled deflection movement of said one fuel tank, so that in event of an impact a movement can be executed shifting said one fuel tank towards an essentially crash proof zone area of the vehicle and simultaneously releasing an inert gas from an air bag filling the volume around the fuel tank.

The advantage of the solution according to the invention resides in the fact that a very compact apparatus is created and secondly that in the event of a crash the fuel tank is protected from the effect of excessive crash energy as well as from an oxygen containing atmosphere and undesirable ingnition sparks.

Other objects, advantages and novel features of the present invention will become apparent from the following detailed description of the invention when considered with the accompanying drawings, where the figures show
- Figure 1: an illustration of the fuel tank mounted on a preferred movable frame,
- Figure 2: an illustration of 4 intermediate stages of the sliding of the fuel tank with 2a before crash, 2b intermediate stage 1, 2c intermediate stage 2 and 2c after crash,
- Figure 3: an illustration the tank protected by an air bag and
- Figure 4: an illustration of the inerting of the atmosphere surrounding the fuel tank.

The invention is particularly suited to vehicles having a pressurized gas tank, especially to vehicles that are operated on hydrogen.

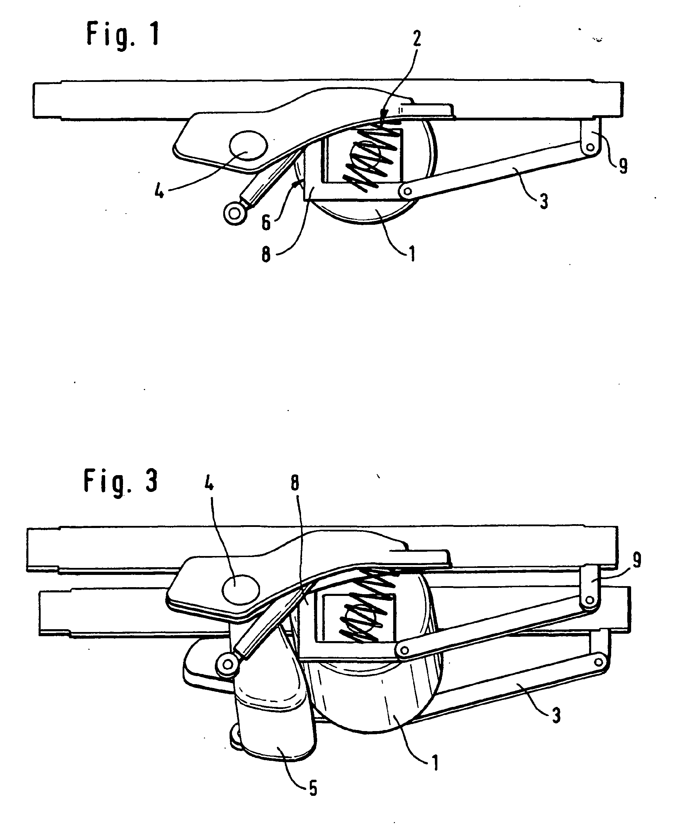

Figure 1 represents a side view of a fuel tank 1 holding a fuel for the operation of a vehicle propulsion system, such as a hydrogen-powered internal combustion engine or a fuel cell system. The fuel tank 1 can be arranged in an underbody area of the vehicle, preferably behind the rear axle 4 in relation to the driver, thereby saving space, and extends between the two rear wheels. The wheel suspension 2 is indicated schematically. The fuel tank 1 can consist of a single tank or of more individual tanks.

The fuel tank 1 is mounted on a structure 3, preferably a movable frame 3, which can move the fuel tank out of the crash zone in case of an impact and which can also serve as a protective frame for the fuel tank 1. With help of this protecting frame 3, the fuel tank 1 can be slid under the rear axle in case of a rear crash. The movable frame 3 holds the said one fuel tank 1. The said frame 3 consists of two side parts each of which is mounted with two arms 8, 9 to the underbody of the vehicle. The fuel tank 1 extends between the two side parts more or less parallel to the rear or front axle. Each side part of the frame 3 is mounted with two arms 8, 9 to the underbody of the vehicle.

The side view of the frame 3 is a box-like shape. The arm 8 which is adjacent to the axle 4, has a rectangular part 6, in which the fuel tank 1 is mounted. This arm 8 is mounted fixed to the underbody structure, which means that it can rotate or can be tilted around its attachment. The other arm 9, which is afar from the axle 4, is slidably mounted to the underbody structure of the vehicle. In case of an impact this arm 9 moves towards the axle 4 causing the arm 8 to rotate subsequently moving the tank 1 down and towards the axle 4.

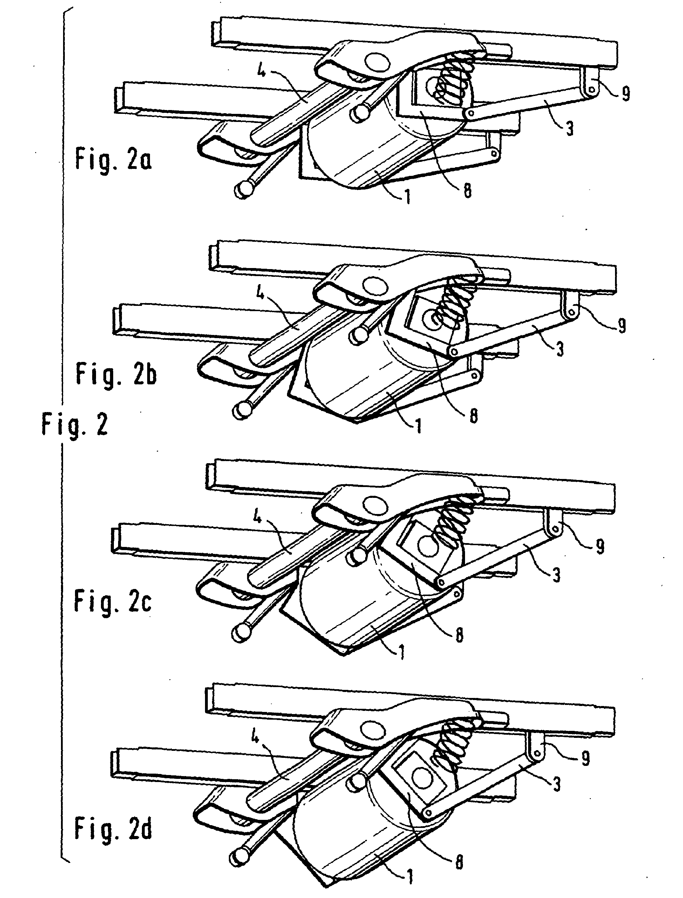

Figure 2 illustrates the sliding of the fuel tank 1 in case of a crash. Fig. 2a exhibits the situation before crash, with the tank 1 mounted behind the rear axle 4. When a crash occurs, the movable frame 3 starts to slide and deform towards the rear axle 4 (Fig. 2b) and continues to slide and move the tank 1 away, out of the crash area (Fig. 2c). The situation after crash is illustrated in Fig. 2d. The fuel tank 1 comes to rest securely unde the rear axle 4 and is safely hold in the frame 3. When the tank 1 is slid under the axle 4 the available deformation distance from the tail end of the vehicle to the tank 1 is increased.

In Figure 3 another feature of the invention is illustrated. The tank 1 can be prevented from colliding with the road surface at a high force load by making use of a protective airbag system 5 under the tank 1. The airbag system 5 consists of one or more individual airbags arranged around the tank 1.

The tank 1 when let free to slide down during crash will be subjected to high loads of several g due to the self-weight of the tank 1 and the frame 3. In order to prevent the tank 1 from being damaged due to this force load, the moving frame 3 can be integrated with airbag systems 5, which can be triggered almost instantaneously at the time of the sliding.

With help of the protective frame 3 the tank 1 can be slid at least partially under the rear axle 4 and the airbag system 5 are inflated due to a signal from a conventional crash sensor of a conventional vehicle control unit or the like. The airbag system 5 help the tank 1 in reaching a safe position close to the road surface, but letting the tank 1 descend under the axle 4 in a safe and controlled manner.

The airbag system 5, when triggered inflate under tremendeous pressure. This pressure, which is controllable, can possibly clear the road surface around it and make free of small distrubances and obstacles which could damage the tank 1. When the airbag system 5 is inflated, the tank 1 can be made to fall over it, which will ensure the safe descent of the tank 1 to a lower and safer level away from the collision level. The placement of the airbag system 5 can be decided on the kinetmatics analysis of the frame structure of the vehicle, in order to get an optimum usage of the airbag system 5. This safety feature can be easily incorporated, by integrating it with already existing safety sensors and instrumentation. This proves to be very economical since this safety feature does not require any additional sensor and measurement system onboard.

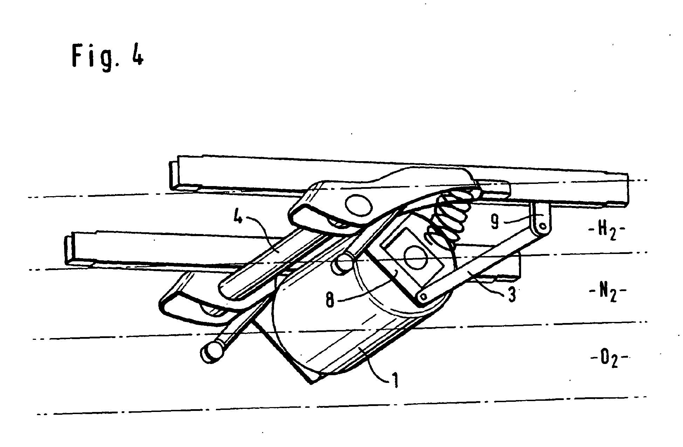

Figure 4 represents the situation with nitrogen gas in the vicinity of the tank 1 after the crash. An advantage is that the airbag system 5 uses an inert gas as inflating gas. Preferably, the electric power supply of the vehicle is automatically shut off and also the valves of the hydrogen tank 1 in case of impact.

Solid propellant gas generators have been used for a long time as fire suppressants in many fire-fighting allications. One such gas propellants is sodium azide. Sodium azide is used to inflate the airbags in automobiles. This compound, when ignited at 270°C, will decompose rapidly releasing large amounts of nitrogen. When the nitrogen gas is released out from the airbag system 5, this nitrogen gas, being lighter than oxygen, will displace oxygen molecules from the vicinity of the tank 1 and make the atmosphere inert for a short period of time. This reduces the chances of a combustible mixture formation by hydrogen and oxygen molecules, thereby minimizing the risk of undesired combustion of the hydrogen gas. The nitrogen gas can form a barrier between the oxygen containing ambient air and hydrogen which might possibly bleed out of the tank 1 or ruptured tubes or vents (not shown)

Should a fuel tank 1 be alternatively or additionally arranged in front of the front axle of the vehicle, these considerations apply analogously in the event of a frontal impact. The fuel tank 1 would then be shifted towards the front axle, preferably under the front axle, in the event of an impact.

The foregoing disclosure has been set forth merely to illustrate the invention and is not intended to be limiting. Since modifications of the disclosed embodiments incorporating the substance of the invention may occur to persons skilled in the art, the invention should be construed to include everything within the scope of the appended claims.

## Claims

1. Vehicle having at least one fuel tank (1) for holding a fuel for the operation of a vehicle propulsion system,
a structure (3) and for executing a controlled deflection movement of said one fuel tank (1) so that in the event of an impact, a movement can be executed shifting said one fuel tank (1) away from the area of impact **characterized in that** an airbag system (5) is provided for simultaneously inflating under or around the said one tank (1) preventing it from colliding with the surface road or obstacles.

2. Vehicle according to Claim 1,
**characterized in that**
the said one fuel tank (1) is arranged in an underbody area of the vehicle.

3. Vehicle according to Claim 1,
**characterized in that**
the said one fuel tank (1) is arranged in an area in front of a front axle or behind a rear axle (4).

4. Vehicle according to Claim 3,
**characterized in that**
the controlled deflection movement of said one fuel tank (1) is shifting said one fuel tank (1) towards the respective adjacent front axle or rear axle (4).

5. Vehicle according to Claim 1,
**characterized in that**
the said frame (3) consists of two side parts each of which is mounted with two arms (8, 9) to the underbody of the vehicle where the fuel tank (1) extends between the two parts.

6. Vehicle according to Claim 5,
**characterized in that**
the one arm (8) of the said movable frame (3) close to the axle (4) is mounted fixed but tiltable or rotatable and the other arm (9) is slidably mounted to the underbody structure of the vehicle.

7. Vehicle according to Claim 1,
**characterized in that**
when the airbag system (5) is inflated the said one fuel tank (1) falls over the airbag system (5) or at least one airbag of said airbag system (5).

8. Vehicle according to Claim 1,
**characterized in that**
the said one fuel tank (1) holds compressed hydrogen as a fuel.

## Patentansprüche

1. Fahrzeug, das mindestens einen Kraftstofftank (1) zur Aufnahme eines Kraftstoffs für den Betrieb eines Fahrzeugantriebssystems sowie
eine Konstruktion (3) zur Durchführung einer kontrollierten Ausweichbewegung des einen Kraftstofftanks (1) besitzt, so dass im Falle eines Aufpralls eine Bewegung durchgeführt werden kann, die den einen Kraftstofftank (1) weg von der Aufprallfläche verschiebt, **dadurch gekennzeichnet, dass** ein Luftsacksystem (5) vorgesehen ist, das sich gleichzeitig unter dem einen Tank (1) oder um diesen herum aufbläst, um zu verhindern, dass er mit der Fahrbahn oder Hindernissen zusammenprallt.

2. Fahrzeug nach Anspruch 1, **dadurch gekennzeichnet, dass** der eine Kraftstofftank (1) in einer Unterbodenfläche des Fahrzeugs vorgesehen ist.

3. Fahrzeug nach Anspruch 1, **dadurch gekennzeichnet, dass** der eine Kraftstofftank (1) in einer Fläche vor einer Vorderachse oder hinter einer Hinterachse (4) vorgesehen ist.

4. Fahrzeug nach Anspruch 3, **dadurch gekennzeichnet, dass** die kontrollierte Ausweichbewegung des einen Kraftstofftanks (1) den einen Kraftstofftank (1) hin zur jeweiligen angrenzenden Vorderachse oder Hinterachse (4) verschiebt.

5. Fahrzeug nach Anspruch 1, **dadurch gekennzeichnet, dass** der Rahmen (3) aus zwei Seitenteilen besteht, die jeweils mit zwei Armen (8, 9) am Unterboden des Fahrzeugs montiert sind, wo sich der Kraftstofftank (1) zwischen den zwei Teilen erstreckt.

6. Fahrzeug nach Anspruch 5, **dadurch gekennzeichnet, dass** der eine Arm (8) des bewegbaren Rahmens (3) in der Nähe der Achse (4) feststehend, jedoch abkippbar oder drehbar, und der andere Arm (9) verschiebbar an der Unterbodenkonstruktion des Fahrzeugs montiert sind.

7. Fahrzeug nach Anspruch 1, **dadurch gekennzeichnet, dass** der eine Kraftstofftank (1), wenn das Luftsacksystem (5) aufgeblasen wird, über das Luftsacksystem (5) oder mindestens einen Luftsack des Luftsacksystems (5) fällt.

8. Fahrzeug nach Anspruch 1, **dadurch gekennzeichnet, dass** der eine Kraftstofftank (1) verdichteten Wasserstoff als einen Kraftstoff enthält.

## Revendications

1. Véhicule ayant au moins un réservoir de carburant (1) pour contenir un carburant pour le fonctionnement d'un système de propulsion de véhicule, et
une structure (3) pour exécuter un mouvement de déviation contrôlé dudit un réservoir de carburant (1) de telle manière que lors d'un impact, un mouvement peut être exécuté en décalant ledit réservoir de carburant (1) hors de la zone de l'impact,
**caractérisé en ce que**
un système d'airbags (5) est placé pour se gonfler simultanément sous ou autour dudit un réservoir (1) l'empêchant d'entrer en collision avec la surface de la route ou des obstacles.

2. Véhicule selon la revendication 1,
**caractérisé en ce que**
ledit un réservoir de carburant (1) est agencé dans une zone de soubassement de carrosserie du véhicule.

3. Véhicule selon la revendication 1,
**caractérisé en ce que**
ledit un réservoir de carburant (1) est agencé dans une zone devant d'un axe avant ou derrière un axe arrière (4).

4. Véhicule selon la revendication 1,
**caractérisé en ce que**
le mouvement de déviation contrôlé dudit un réservoir de carburant (1) décale ledit un réservoir de carburant (1) vers l'axe avant ou l'axe arrière (4) respectif.

5. Véhicule selon la revendication 1,
**caractérisé en ce que**
ledit cadre (3) consiste en deux parties latérales chacune d'entre elle étant montée avec deux bras (8, 9) sur le soubassement de carrosserie du véhicule où le réservoir de carburant (1) s'étend entre les deux parties.

6. Véhicule selon la revendication 1,
**caractérisé en ce que**
le premier bras (8) dudit cadre mobile (3) proche de l'axe (4) est monté fixe mais inclinable ou tournant et l'autre bras (9) est monté de manière coulissante sur la structure de soubassement de carrosserie du véhicule.

7. Véhicule selon la revendication 1,
**caractérisé en ce que**
quand le système d'airbags (5) est gonflé ledit un réservoir de carburant (1) tombe sur le système d'airbags (5) ou au moins un airbag dudit système d'airbags (5).

8. Véhicule selon la revendication 1,
**caractérisé en ce que**
ledit un réservoir de carburant (1) contient de l'hydrogène sous pression comme carburant.
